# EUROPÄISCHE PATENTANMELDUNG

(11) **EP 2 226 610 A1**
(43) Veröffentlichungstag der Anmeldung: **08.09.2010**
(21) Anmeldenummer: 09154556.6
(22) Anmeldetag: 06.03.2009
(51) Int. Cl.: G01C 1/02, G01C 15/00, G01C 15/06

(54) **Geodätisches Vermessungssystem und Verfahren zum Identifizieren einer Zieleinheit mit einem geodätischen Vermessungsgerät**

(71) Anmelder: Leica Geosystems AG, 9435 Heerbrugg (CH)
(72) Erfinder: Jaeger, Markus, A-6863, Egg (AT); Lais, Josef, CH-9437, Marbach (CH); Nindl, Daniel, A-5723, Uttendorf im Pinzgau (AT); Schroeder, Marco, CH-8582, Dozwil (CH); Benz, Paul, CH-9444, Diepoldsau (AT)
(74) Vertreter: Kaminski Harmann

(57) **Zusammenfassung**

Die Erfindung betrifft ein geodätisches Vermessungssystem (1) mit einem geodätischen Vermessungsgerät (2) - insbesondere Theodolit oder Totalstation - und mehreren Zielobjekten (11), die eine Zielobjekt-Menge bilden. Den Zielobjekten (11) ist dabei jeweils ein eindeutiger Identifizierungscode (ID) zugeordnet, sodass sich die Zielobjekte (11) anhand des Identifizierungscodes (ID) untereinander unterscheiden lassen.

Das Vermessungsgerät (2) weist eine Entfernungs- und Winkelmessfunktionalität zur Positionsbestimmung der Zielobjekte (11) und mindestens eine Strahlungsquelle (21) zur Emission eines optischen Strahls (22) in eine definierte Raumrichtung, insbesondere eines schwenkbaren vertikal aufgefächerten Laserstrahls, auf.

Eine Zieleinheit (3), die eines der Zielobjekte (11) darstellt, weist einen Reflektor (31), insbesondere einen optischen Retroreflektor, und einen Detektor (32) zum Empfang des optischen Strahls (22) auf.

Erfindungsgemäss ist dabei das Vermessungsgerät (2) derart zur Emission des Strahls (22) ausgebildet, dass dem Strahl (22) der Identifizierungscode (ID) eines gesuchten Zielobjekts (11) aus der Zielobjekt-Menge als ein zu suchender Code (sID) aufmoduliert werden kann. Die Zieleinheit (3) weist eine mit dem Detektor (32) verbundene Auswertekomponente (33) zur Überprüfung einer Übereinstimmung zwischen dem dem Strahl (22) aufmodulierten Code (sID) und dem eigenen Identifizierungscode (ID) der Zieleinheit (3) auf, sowie eine Sendekomponente (34) zur bei festgestellter Übereinstimmung erfolgenden Übermittlung eines reaktiven Bestätigungssignals (35) an das geodätische Vermessungsgerät (2). Des Weiteren ist gemäss der Erfindung eine Verarbeitungskomponente (23) des Vermessungsgeräts (2) ausgebildet zur Identifikation der Zieleinheit (3) aus der Zielobjekt-Menge anhand des reaktiven Bestätigungssignals (35), insbesondere abhängig von einem Empfangszeitpunkt des reaktiven Bestätigungssignals (35).

## Beschreibung

Die Erfindung betrifft ein geodätisches Vermessungssystem mit einem geodätischen Vermessungsgerät und einer Zieleinheit als eines von mehreren Zielobjekten nach dem Oberbegriff des Anspruchs 1 sowie ein Verfahren zum Identifizieren einer Zieleinheit mit einem geodätischen Vermessungsgerät nach dem Oberbegriff des Anspruchs 12.

Zum Vermessen eines oder insbesondere mehrerer Zielpunkte sind seit der Antike zahlreiche geodätische Vermessungsgeräte bekannt. Als räumliche Standarddaten werden dabei Entfernung und Richtung bzw. Winkel von einem Messgerät zum zu vermessenden Zielpunkt aufgenommen sowie insbesondere die absolute Position des Messgerätes nebst eventuell vorhandenen Bezugspunkten erfasst.

Allgemein bekannte Beispiele für solche geodätische Vermessungsgeräte stellen Theodolit, Tachymeter und Totalstation, die auch als elektronischer Tachymeter oder Computer-Tachymeter bezeichnet wird, dar. Eine geodätische Messvorrichtung des Stands der Technik ist beispielsweise in der Veröffentlichungsschrift EP 1 686 350 beschrieben. Derartige Geräte verfügen über elektrosensorische Winkel- und Distanzmessfunktionen, welche eine Richtungs- und Distanzbestimmung zu einem ausgewählten Ziel erlauben. Die Winkel- bzw. Distanzgrössen werden dabei im inneren Bezugssystem des Gerätes ermittelt und müssen für eine absolute Positionsbestimmung ggf. noch mit einem äusseren Bezugssystem verknüpft werden.

In vielen geodätischen Anwendungen erfolgt eine Vermessung von Punkten, indem dort speziell ausgestaltete Zielobjekte platziert werden. Diese bestehen meist aus einem Lotstock mit einer anzielbaren Markierung bzw. einem Reflektor zur Definition der Messtrecke bzw. des Messpunktes. Durch ein zentrales geodätisches Vermessungsgerät kann somit auch eine grössere Zahl von Zielobjekten vermessen werden, was allerdings deren Identifikation erforderlich macht. Bei solchen Vermessungsaufgaben werden zur Steuerung des Messvorgangs sowie zur Festlegung oder Registrierung von Messparametern eine Anzahl von Daten, Anweisungen, Sprache und weiteren Informationen zwischen Zielobjekt - insbesondere einem handhaltbaren Datenerfassungsgerät seitens des Zielobjekts - und zentralem Messgerät übertragen. Beispiele für solche Daten sind die Identifikation des Zielobjekts, Neigung des Lotstocks, Höhe des Reflektors über Grund, Reflektorkonstanten oder Messwerte wie Temperatur oder Luftdruck.

Moderne Totalstationen als geodätische Vermessungsgeräte verfügen zudem über Mikroprozessoren zur digitalen Weiterverarbeitung und Speicherung erfasster Messdaten. Die Geräte weisen in der Regel eine kompakte und integrierte Bauweise auf, wobei meist koaxiale Distanzmesselemente sowie Rechen-, Steuer- und Speichereinheiten in einem Gerät vorhanden sind. Abhängig von der Ausbaustufe der Totalstation können zudem eine Motorisierung der Anziel- bzw. Visiereinrichtung sowie Mittel zur automatischen Zielsuche und -verfolgung integriert sein.

Beispiele für Tracking-Vorrichtungen für geodätische Geräte zur Verfolgung eines als Ziel verwendeten Reflektors sind in der EP 0 465 584, der JP 05322569, der JP 07103761 und der DE 195 28 465 beschrieben.

Vorrichtungen zur automatischen - insbesondere groben - Zielsuche benutzen beispielsweise einen vertikal und/oder horizontal aufgefächerten Laserstrahl, die vom geodätischen Gerät, z.B. Theodolit, ausgesendet werden. Wird bei der Bewegung des Theodolits um die Steh- oder Kippachse der an der Zielstation angeordnete Reflektor getroffen und somit ein Teil des Laserstrahls retroreflektiert, wird durch eine im Fernrohr des Theodolits angeordnete Empfangs-Fotodiode ein Signal erzeugt, mit Hilfe dessen dann der Antrieb des Fernrohrs gestoppt wird. Nachteilig ist dabei, dass das System möglicherweise auf alle sich im Sichtfeld befindlichen Reflektoren reagiert, so z.B. auch auf weitere vorhandene, jedoch nicht interessierende Zieleinheiten oder Störreflektoren wie Reflexfolien, Rückstrahler von Fahrzeugen, Fensterscheiben oder ähnlichen Gegenständen.

Aus der Patentschrift CH 676 042 ist eine Vorrichtung mit fächerartigem Sender und Empfänger bekannt, welche in einem drehbaren Messkopf untergebracht ist. Von der Sendeeinheit werden Lichtimpulse in einem Lichtfächer ausgesendet, die reflektierten Impulse werden hinsichtlich Winkelinformation entsprechend ausgewertet.

Eine Weiterführung der obigen Zielsuchvorrichtung zur groben Bestimmung der Zielkoordinaten ist in CH 676 041 beschrieben. Dabei erfolgt eine Kombination mit einer optoelektronischen Vorrichtung zur Feinmessung. Die eigentliche Zielsuchvorrichtung spannt zwei senkrecht aufeinander stehende Fächer auf, mit denen die Lage des Zielpunktes zwei-dimensional grob vermessen wird, die anschliessende Feinvermessung mit der zweiten Vorrichtung kann dann ohne Zielsuchvorgang durchgeführt werden.

In den meisten Fällen wird der Suchvorgang manuell über Sprechfunk oder Datenfunk unterstützt. Bei der im Dokument DE 197 334 91 beschriebenen Vorrichtung wird mittels einer zusätzlichen am Zielobjekt angebrachten optischen Empfangseinheit geprüft, ob der Suchstrahl des Tachymeter das Zielobjekt trifft. Wird der Suchfächer empfangen, so übermittelt das Zielobjekt über Datenfunk eine Treffermeldung an das Tachymeter, woraufhin die Suche gestoppt wird und eine Feinanzielung erfolgt. Insbesondere beginnt dabei das Tachymeter nach Empfang der ersten Treffermeldung eine Drehung in die entgegengesetzte Richtung. Wenn das Lichtbündel der Sendereinheit zum zweiten Mal den Empfänger trifft, erfolgt wiederum Rückmeldung an das Tachymeter. Anhand der Zeit, die in der Elektronikeinheit des Tachymeters zwischen beiden Treffern vergangen ist, wird eine Position des Zielobjektss bestimmt.

Eine Prismenvorrichtung mit einer zusätzlichen Empfangseinrichtung für die optische Übertragung von einem geodätischen Messgerät zur Prismenvorrichtung wird in der US 6,295,174 dargestellt. Dabei wird durch einen optischen Pfad aus dem Bereich des Reflektors Strahlung ausgekoppelt und zu einer Empfangsfläche des achsparallel angeordneten Empfängers übertragen. Durch zwei in unterschiedlichen Farben leuchtende LED wird der Empfangszustand angezeigt.

Die EP 1 734 336 offenbart ein Vermessungssystem mit einer Zieleinheit, die einen Reflektor sowie einen optischem Empfänger und Sender aufweist. Dabei wird vorgeschlagen, den optischen Sender der Zieleinheit unter anderem zur Unterstützung des automatischen Ziel-Suchprozesses zu verwenden. So kann das Zielobjekt nach dem Empfang der Such- oder Messstrahlung die eigene Identifikation, wie beispielsweise die Reflektornummer oder der Reflektortyp, anhand des Senders der Zieleinheit zurück zur Vermessungsstation übermitteln. Die Vermessungsstation kann damit das gesuchte Zielobjekt identifizieren und sich optimal bezüglich des Zielobjekts konfigurieren.

Auch die EP 1 573 271 offenbart eine Zieleinheit mit optischem Sender, wobei - nach Empfang von Messstrahlung eines Vermessungsgeräts - die Zieleinheit ein optisches Signal zurücksendet, welchem die eigene Identität der Zieleinheit aufmoduliert ist.

Ein wesentlicher Nachteil der bisher bekannten Vorrichtungen ist eine ungenügende Robustheit gegen eine falsche Identifikation der Zieleinheit im Fall von mehreren sich im Sichtfeld befindenden Zieleinheiten. Ebenso besteht bei einigen Vorrichtungen des Standes der Technik die Gefahr einer versehentlichen Interpretation eines reflektierenden Fremdobjekts als Zielobjekt. Zudem erweist sich bei einigen bekannten Vorrichtungen des Standes der Technik das aufwändige Übermitteln der Zieleinheit-Identitäten von den jeweiligen Zieleinheiten an das Vermessungsgerät als nachteilig.

Sind z.B. mehrere Zieleinheiten aufgestellt, die - z.B. entsprechend der technischen Lehre aus der EP 1 573 271 - jeweils reaktiv auf ein Detektieren eines Suchstrahls ihre eigene Identität an das Vermessungsgerät übermitteln, so bekommt die Vermessungsstation von jedem der Ziele jeweils eine Identität übermittelt. Wird dabei allerdings nur eine Zieleinheit gesucht, so ist seitens des Vermessungsgeräts ein nachteilig hoher Datenverarbeitungsaufwand erforderlich, um die Vielzahl von Antworten der jeweiligen Zieleinheiten auszuwerten und die eigentlich gesuchte Zieleinheit aus den Antworten aller Zieleinheiten zu filtrieren und zu identifizieren.

Eine Aufgabe der Erfindung ist daher das Bereitstellen eines geodätischen Vermessungssystems mit einem Vermessungsgerät und einer Zieleinheit bzw. eines Verfahrens zur Identifikation einer Zieleinheit mit einem Vermessungsgerät, wobei eine alternative und insbesondere verbesserte Identifikation der Zieleinheit aus einer Zielobjekt-Menge ermöglicht wird.

Insbesondere soll dabei - im Fall von mehreren sich im Sichtfeld des geodätischen Vermessungsgeräts befindlichen Zieleinheiten - eine Suche nach einer bestimmten Zieleinheit vereinfacht und dennoch möglichst robust gegen Fehlidentifikation ermöglicht werden. Im Speziellen soll dabei ein geringerer Datenverarbeitungsaufwand für das Vermessungsgerät zur Identifizierung der Zieleinheit aus der Zielobjekt-Menge erforderlich sein.

Diese Aufgaben werden durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Die Erfindung löst sich von gattungsgemässen Vermessungssystemen mit aktiven Zieleinheiten des Standes der Technik, bei welchen stets die im Sichtfeld befindlichen Zieleinheiten selbst jeweils ihre eigene Identität bei Detektion eines Suchstrahls des Vermessungsgeräts als Antwort zurück übermitteln.

Hingegen wird gemäss der Erfindung einem - insbesondere zur automatischen Zielsuche - emittierten optischen Strahl des Vermessungsgeräts bereits ein Identifizierungscode des gesuchten Zielobjekts als zu suchender Code aufmoduliert. Die Zieleinheit weist neben einer Zielmarke, wie einem Reflektor, einen Empfänger für den Strahl auf sowie eine Auswertekomponente zur Überprüfung, ob der dem empfangenen Strahl aufmodulierte Code mit dem eigenen Identifizierungscode übereinstimmt.

Im Fall einer dabei festgestellten Übereinstimmung übermittelt die Zieleinheit ein derart geeignetes reaktives Bestätigungssignal an das Vermessungsgerät, dass anhand des Bestätigungssignals, im Speziellen abhängig von einem Empfangszeitpunkt desselben, die Zieleinheit durch das Vermessungsgerät identifiziert werden kann. Insbesondere sendet dabei die Zieleinheit ausschliesslich nur im Fall einer festgestellten Übereinstimmung ein Antwortsignal aus.

Das Bestätigungssignal, das z.B. optisch oder per Funk übermittelt wird, kann dabei ein Standard-Signal darstellen, sodass dies nicht notwendigerweise erneut die eigene Identität der antwortenden Zieleinheit tragen muss. Aufgrund der bereits selektiven Suchanfrage kann dabei dennoch eine eindeutige Identifikation der Zieleinheit anhand des Bestätigungssignals erfolgen.

Erfindungsgemäss wird somit eine fehlerunanfällige Identifikation einer gesuchten Zieleinheit durch das geodätische Gerät ermöglicht, ohne dass seitens des Vermessungsgeräts bei einer Zielsuche jeweils die Identitäten von mehreren antwortenden Zieleinheiten verarbeitet werden müssen. Hingegen wird die Suche bereits selektiv gestaltet, sodass das Vermessungsgerät nur eine entsprechende Antwort von der oder den eigentlich gesuchten Zieleinheiten erhält. Somit kann der Verarbeitungsaufwand seitens des Vermessungsgeräts hinsichtlich der von verschiedenen Zieleinheiten jeweils empfangenen Identitäten erheblich verringert werden, da erfindungsgemäss selektiv bereits nur diejenige Zieleinheit auf den insbesondere vertikal aufgefächerten Suchstrahl des Vermessungsgeräts antwortet, die gesucht wird und deren Position zu vermessen ist.

Beispielsweise erfolgt das Identifizierungsverfahren gemäss der Erfindung wie folgt: Im Rahmen eines automatischen Suchvorgangs zum Auffinden einer zu vermessenden Zieleinheit durch ein Vermessungsgerät emittiert ebendieses einen Such-Laserstrahl, dem bereits die ID des gesuchten Ziels als zu suchender Code aufmoduliert ist.

Der Such-Laserstrahl kann beispielsweise als aufgefächerter Laserstrahl (Such-Fächer) emittiert und zur Absuchung eines Sichtfeldbereichs - insbesondere innerhalb eines bestimmten Winkelbereichs - geschwenkt und/oder geneigt werden. Im Speziellen kann eine vertikale, horizontale oder geneigte Auffächerung des Such-Strahls vorgesehen sein, wobei der Such-Strahl z.B. um eine Stehachse des Vermessungsgeräts bzw. um eine horizontale Achse rotiert werden kann.

Die Zieleinheit weist z.B. ein Rundum-Prisma als Reflektor und einen optischen Empfänger, insbesondere einen Rundum-Empfänger mit omnidirektionalem Empfangsbereich, auf. Trifft bei einem Suchvorgang der Such-Fächer nun auf der Zieleinheit auf, so wird dieser durch den Empfänger detektiert und eine Auswertekomponente der Zieleinheit vergleicht den dem Fächer aufmodulierten Code mit der eigenen ID. Bei Übereinstimmung übermittelt die ZielEinheit reaktiv, insbesondere mit bekannter zeitlicher Antwortverzögerung, ein Bestätigungssignal an das Vermessungsgerät.

Das Rückübermitteln des reaktiven Bestätigungssignals durch die Zieleinheit im Falle der festgestellten Übereinstimmung der IDs kann dabei erfolgen
- anhand eines optischen Senders (LED oder Laser) an der Zieleinheit und/oder
- per Funk, beispielsweise durch einen mit dem Vermessungsgerät in Funk-Verbindung stehenden Peripheriegerät seitens der Zieleinheit.

Das Vermessungsgerät empfängt das Übereinstimmungssignal, stoppt den Suchvorgang und fährt - insbesondere unter Berücksichtigung der bekannten Zeitverzögerung für das Generieren und Übermitteln des Übereinstimmungssignals - zurück zum Azimutwinkel der Zieleinheit mit der "richtigen", gesuchten ID.

Die Überprüfung der IDs und das Generieren sowie Rückübermitteln des Übereinstimmungssignals seitens der Zieleinheit können dabei so schnell wie möglich - d.h. unmittelbar nach Empfang und Überprüfung des Such-Strahls - erfolgen und die dafür benötigte Zeit als Antwortverzögerung jeweils aktuell erfasst werden. Im Fall, dass das Rückübermitteln eines Bestätigungssignals als Antwort auf die selektive Suchanfrage so schnell wie möglich erfolgt, kann als Antwortverzögerung fiktiv auch eine Zeitspanne von Null angenommen werden.

Alternativ kann jedoch auch eine definierte Antwortverzögerung für das Rückübermitteln des Übereinstimmungssignals fest vorgegeben werden, sodass die Zieleinheit bei festgestellter Übereinstimmung stets - rein beispielhaft - genau 0,05 Sekunden nach Empfang des Such-Fächers das Bestätigungssignal aussendet.

Trifft beim Suchvorgang der Such-Fächer auf weitere im Sichtfeld des Vermessungsgeräts positionierte Ziel-Einheiten auf, so wird auch durch diese Ziel-Einheiten die aufmodulierte ID mit der jeweils eigenen ID verglichen. Bei Nichtübereinstimmung der IDs wird entweder überhaupt kein Antwortsignal oder ein definiertes Nichtübereinstimmungssignal übermittelt und der Suchvorgang des Vermessungsgeräts wird nicht unterbrochen bzw. fortgesetzt.

Anhand des erfindungsgemässen reaktiven Bestätigungssignals der Zieleinheit kann somit eine Verarbeitungskomponente des Vermessungsgeräts die gesuchte Zieleinheit sicher identifizieren.

Gemäss Verfahren des Standes der Technik übersenden hingegen sämtliche, den Suchstrahl detektierende Zieleinheiten die eigene ID als Antwort auf einen Such-Fächer zurück an das Vermessungsgerät, wodurch ein nachteilig hoher Datenverarbeitungsaufwand seitens des Vermessungsgeräts erforderlich ist, um die Vielzahl von Antworten - die die jeweiligen IDs der Zieleinheiten enthalten - auszuwerten. Durch die gemäss der vorliegenden Erfindung bereits selektiv gestaltete automatische Zielsuche kann dieser Datenverarbeitungsaufwand seitens des Vermessungsgeräts nun deutlich verringert werden, da jeweils nur ein entsprechendes Bestätigungssignal von den eigentlich gesuchten Zielen erhalten wird.

Nach der Identifikation der Zieleinheit gemäss der Erfindung kann - wie aus dem Stand der Technik hinlänglich bekannt - eine, insbesondere automatische, Feinanzielung der Zieleinheit und ein hochpräzises Bestimmen deren Position durch das Vermessungsgerät erfolgen.

Alternativ zum Aufmodulieren der ID des gesuchten Zielobjekts auf einen fächerförmigen, rotierenden Such-Strahl, der beispielsweise eine Wellenlänge von 850 nm aufweisen kann, kann die gesuchte ID jedoch auch einem zur elektronischen Entfernungsmessung emittierten Strahl, der beispielsweise eine Wellenlänge von 780 nm aufweisen kann, oder einem zur automatischen Feinanzielung emittierten Strahl, der beispielsweise eine Wellenlänge von 780 nm aufweisen kann, aufmoduliert werden. Beispielsweise kann dadurch auch während eines eigentlichen Vermessungsvorgangs die Identität der Zieleinheit anhand des Bestätigungssignals sichergestellt werden.

Geeignete Modulationsarten, um dem durch das Vermessungsgerät emittierten Strahl den Identifizierungscode des gesuchten Zielobjekts als zu suchender Code aufzumodulieren, sind dem Fachmann bekannt. Zum Beispiel kann eine entsprechende Intensitätsmodulation des emittierten Strahls erfolgen.

Entsprechend einer weiteren Ausführungsform des erfindungsgemässen Vermessungssystems sind insbesondere mehrere Zielobjekte der Zielobjekt-Menge als Zieleinheiten ausgebildet, die jeweils aufweisen
- einen Reflektor, insbesondere einen optischen Retroreflektor,
- einen Detektor zum Empfang des optischen Strahls,
- eine mit dem Detektor verbundene Auswertekomponente zur Überprüfung, ob der dem empfangenen Strahl aufmodulierte Code mit dem eigenen Identifizierungscode übereinstimmt, und
- eine Sendekomponente zur Übermittlung eines reaktiven Bestätigungssignals an das geodätische Vermessungsgerät, falls die Auswertekomponente eine Übereinstimmung feststellt.

Das erfindungsgemässe Verfahren und die erfindungsgemässe Vorrichtung werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig.1: ein erfindungsgemässes geodätisches Vermessungs- system, wobei ein Bestätigungssignal per Funk von der Zieleinheit an das Vermessungsgerät übermittelt wird;
- Fig.2: ein erfindungsgemässes geodätisches Vermessungs- system, wobei - aufgrund festgestellter Nichtübereinstimmung der IDs - kein Antwortsignal von der Zieleinheit an das Vermessungsgerät übermittelt wird;
- Fig.3: ein erfindungsgemässes geodätisches Vermessungs- system, wobei ein Bestätigungssignal mit zusätzlicher Übereinstimmungs-Information per Funk von der Zieleinheit an das Vermessungsgerät übermittelt wird;
- Fig.4: ein erfindungsgemässes geodätisches Vermessungs- system, wobei ein Antwortsignal mit Nichtübereinstimmungs-Information per Funk von der Zieleinheit an das Vermessungsgerät übermittelt wird;
- Fig.5: ein erfindungsgemässes geodätisches Vermessungs- system, wobei ein optisches Signal als
- Fig.6: Bestätigungssignal von der Zieleinheit an das Vermessungsgerät übermittelt wird; ein erfindungsgemässes geodätisches Vermessungs- system, wobei sowohl ein optisches Signal als auch ein Funk-Signal als Bestätigungssignale von der Zieleinheit an das Vermessungsgerät übermittelt werden;
- Fig.7: ein erstes Beispiel für ein erfindungsgemässes automatisches Such- und Identifizierungsverfahren im Rahmen einer typischen praktischen Anwendung im Feld; und
- Fig.8: ein zweites Beispiel für ein erfindungsgemässes automatisches Such- und Identifizierungsverfahren im Rahmen einer typischen praktischen Anwendung im Feld.

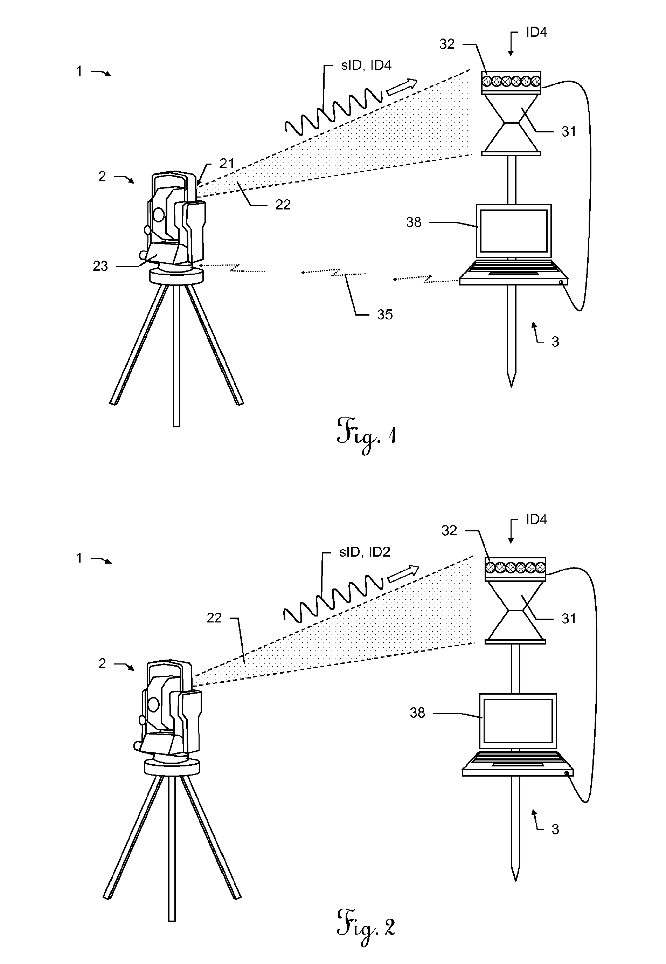

Figur 1 zeigt ein erfindungsgemässes geodätisches Vermessungssystem 1 mit einem als Totalstation ausgebildeten geodätischen Vermessungsgerät 2 und einer Zieleinheit 3, die eines von mehreren Zielobjekten einer Zielobjekt-Menge darstellt. Der Einfachheit halber sind in den Figuren 1 bis 6 die weiteren Zielobjekte der Zielobjekt-Menge - ausser der Zieleinheit 3 - nicht dargestellt.

Den Zielobjekten ist dabei jeweils ein eindeutiger Identifizierungscode, z.B. eine ID-Nummer, derart zugeordnet, dass sich die Zielobjekte anhand des Identifizierungscodes untereinander unterscheiden lassen.

Das Vermessungsgerät 2 weist eine Entfernungs- und Winkelmessfunktionalität zur Positionsbestimmung der Zielobjekte und mindestens eine - aufgrund der perspektivischen Darstellung in Figur 1 nicht direkt ersichtliche - Strahlungsquelle 21 zur Emission eines optischen Strahls 22 in eine definierte Raumrichtung auf. Insbesondere ist der optische Strahl 22 ein vertikal aufgefächerter Laserstrahl einer automatischen Zielsuchvorrichtung des Vermessungsgeräts 2, wobei der fächerförmige Laserstrahl zur Absuchung eines Sichtfeldbereichs um eine Stehachse des Vermessungsgeräts 2 horizontal schwenkbar ist.

Die Zieleinheit 3 weist einen Reflektor 31, insbesondere einen optischen Rundum-Retroreflektor, und einen Detektor 32 zum Empfang des optischen Strahls 22 auf. Der Reflektor 31 und der Detektor 32 können dabei an einer gemeinsamen Vermessungsstange befestigt sein, insbesondere wobei der Detektor 32 über oder unter dem Reflektor 31 an diesen anschliessend angeordnet ist. Alternativ kann der Detektor 32 - wie aus dem Stand der Technik bekannt - jedoch auch in den Reflektor 31 integriert sein. Im Speziellen ist auch der Detektor 32 als Rundum-Detektor mit einem horizontalen Winkelerfassungsbereich von 360° ausgebildet, wofür der Detektor 32 beispielsweise eine Vielzahl von kreisförmig mit radialer Ausrichtung angeordneten Erfassungselementen, wie etwa CCD- oder CMOS-Sensorelementen, aufweisen kann.

Erfindungsgemäss ist nun das Vermessungsgerät 2 derart zur Emission des optischen Strahls 22 ausgebildet, dass dem Strahl 22 der Identifizierungscode ID4 eines gesuchten Zielobjekts der Zielobjekt-Menge als zu suchender Code sID aufmoduliert ist. D.h., dass bereits der emittierte Such-Fächer 22 eine selektive Suchanfrage trägt, die zielstationsseitig auslesbar ist. In dem in Figur 1 dargestellten Fall wird von dem Vermessungsgerät die Zieleinheit 3 mit dem Identifizierungscode ID4 als das zu vermessende Zielobjekt gesucht, weshalb dem Such-Fächer 22 eben dieser Identifizierungscode ID4 als zu suchender Code sID aufmoduliert ist.

Zur Erfassung und Auslesung der dem Such-Fächer 22 aufmodulierten Suchanfrage, die zumindest aus dem zu suchenden Code sID besteht, weist die Zieleinheit 3 eine mit dem Detektor 32 verbundene Auswertekomponente auf. Zur Auslesung des dem Such-Fächer 22 aufmodulierten Codes sID erfolgt dabei noch ein Demodulieren der durch den Detektor 32 empfangenen Such-Fächer-Strahlung. Ferner ist die Auswertekomponente zur Überprüfung ausgebildet, ob der dem Strahl 22 aufmodulierte Code sID mit dem eigenen Identifizierungscode ID4 der Zieleinheit 3 übereinstimmt.

Wird eine Übereinstimmung festgestellt, was in Figur 1 der Fall ist, da die Zieleinheit 3 das von dem Vermessungsgerät 2 gesuchte Zielobjekt darstellt, übermittelt die Zieleinheit 3 ein reaktives Bestätigungssignal 35 an das Vermessungsgerät 2. Dafür weist die Zieleinheit 3 eine Sendekomponente auf, die zur Übermittlung eines solchen Bestätigungssignals 35 ausgebildet ist. D.h., dass im Fall einer festgestellten Übereinstimmung der IDs die Zieleinheit 3 das besagte Bestätigungssignal 35 als Antwort auf die selektive Suchanfrage an das Vermessungsgerät 2 sendet. Im Speziellen wird das reaktive Bestätigungssignal 35 dabei mit einer bekannten zeitlichen Antwortverzögerung nach der Detektion des optischen Strahls 22 von der Zieleinheit 3 an das Vermessungsgerät 2 übermittelt.

Die Sendekomponente der Zieleinheit kann z.B. als Funkmodul zur Aussendung eines Funksignals als das reaktive Bestätigungssignal 35 ausgebildet sein. Insbesondere können das Funkmodul und/oder die Auswertekomponente dabei in ein mit dem Detektor 32 verbundenes handhaltbares mobiles Peripheriegerät 38 mit Fernsteuerfunktion für das Vermessungsgerät 2 - wie z.B. in einen Feldrechner oder einen Datenlogger der Zieleinheit - integriert sein bzw. durch dieses bereitgestellt werden.

Da in dem in Figur 1 dargestellten Fall von dem Vermessungsgerät 2 genau die Zieleinheit 2 als das zu vermessende Zielobjekt gesucht wird, stimmt der aus dem Such-Fächer ausgelesene Identifizierungscode ID4 mit der eigenen Identität ID4 der gezeigten Zieleinheit 3 überein, sodass die Zieleinheit 3 reaktiv auf die selektive Suchanfrage das entsprechende Bestätigungssignal 35 per Funk an das Vermessungsgerät 2 übermittelt.

Das Vermessungsgerät 2 empfängt das reaktive Bestätigungssignal 35 z.B. anhand einer Empfangseinheit, die zur Erwartung des Bestätigungssignals 35 innerhalb eines vorgegebenen Zeitfensters während und/oder nach der Emission des Strahls 22 ausgebildet ist, und kann mittels einer Verarbeitungskomponente 23 die gesuchte Zieleinheit 3 aus der Zielobjekt-Menge anhand des Bestätigungssignals 35, insbesondere abhängig von einem Empfangszeitpunkt des Bestätigungssignals 35, identifizieren.

Im Speziellen ist dabei das Vermessungsgerät 2 mit einer automatischen Zielsuchfunktion ausgestattet und ausgebildet zur Erfassung von jeweils an Zielobjekten der Zielobjekt-Menge reflektierten Teilen des fächerförmigen Such-Strahls 22 als Reflexe, wobei den Reflexen ein gemessener Winkel und insbesondere eine gemessene Entfernung zugeordnet wird.

Als Identifikation kann nun die Auswerteeinheit 23 - abhängig vom Empfangszeitpunkt des Bestätigungssignals 35 - einem der erfassten Reflexe den Identifizierungscode ID4 der Zieleinheit 3, die das gesuchte und auch gefundene Zielobjekt darstellt, zuweisen und somit den entsprechenden Reflex mit dem Identifizierungscode ID4 verknüpfen.

In Figur 2 ist ein Anwendungsbeispiel abgebildet, bei dem die gezeigte Zieleinheit 3 nicht das von dem Vermessungsgerät 2 gesuchte Zielobjekt darstellt.

Dem fächerförmigen Such-Strahl 22 ist daher ein sich von dem Identifizierungscode ID4 der gezeigten Zieleinheit 3 unterscheidender Identifizierungscode ID2 als der zu suchende Code sID aufmoduliert.

Trifft beim Suchvorgang der Such-Fächer 22 auf die im Sichtfeld des Vermessungsgeräts 2 positionierte Zieleinheit 3 auf, so wird durch diese der aufmodulierte Code sID mit dem eigenen Identifizierungscode ID4 verglichen. Aufgrund der Nichtübereinstimmung der IDs wird kein Antwortsignal übermittelt und der Suchvorgang des Vermessungsgeräts 2 wird nicht unterbrochen.

Der im Rahmen der automatischen Zielsuche erfasste Reflex, der beim Überstreichen der gezeigten Zieleinheit 3 durch den Such-Fächer 22 erzeugt und durch das Vermessungsgerät 2 registriert wird, kann seitens des Vermessungsgeräts 2 z.B. als Störreflex oder als "nichtgesuchtes" Zielobjekt gekennzeichnet werden, oder alternativ gar sofort aus einem Reflexe-Speicher gelöscht werden. Ebenso können weitere Reflexe von weiteren "nichtgesuchten" Zielobjekten gehandhabt werden, für die seitens des Vermessungsgeräts 2 kein reaktives Bestätigungssignal erhalten wird und somit offensichtlich nicht das eigentlich gesuchte Zielobjekt darstellen.

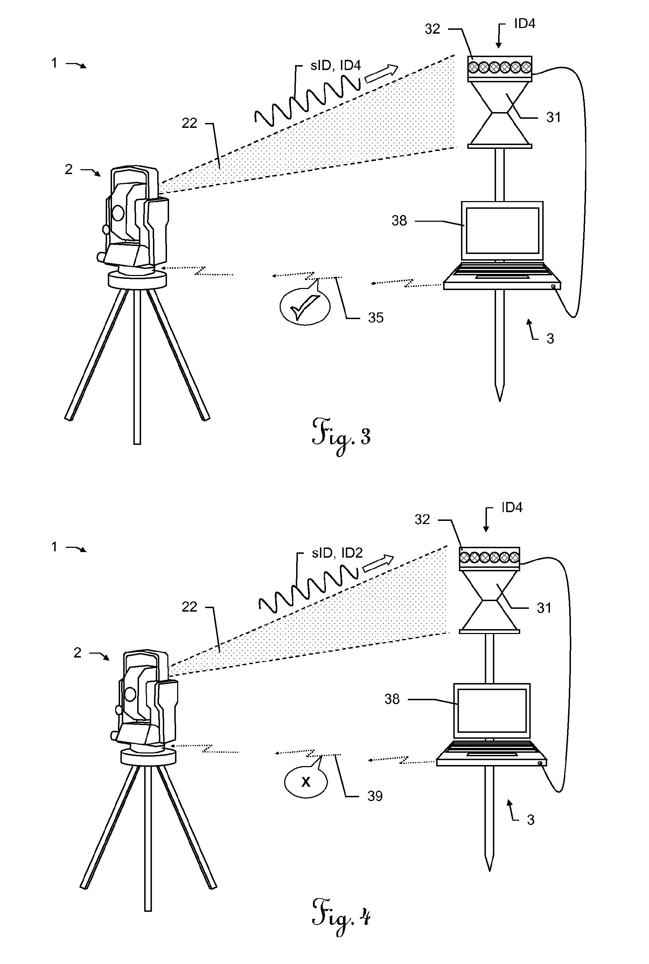

Figur 3 zeigt ein weiteres Anwendungsbeispiel, wobei - wie in Figur 1 - wiederum die abgebildete Zieleinheit 3 das vom Vermessungsgerät 2 gesuchte Zielobjekt darstellt.

In diesem Fall ist die Zieleinheit 3 derart ausgebildet, dass das reaktive Bestätigungssignal 35 zusätzliche Information enthält. Beispielsweise kann zur eindeutigen Bestätigung der Suchanfrage das als Antwort zurückgesendete Bestätigungssignal 35 erneut den Identifizierungscode ID4 der Zieleinheit 3 aufweisen, sodass eine überbestimmte Identifikation ermöglicht wird und somit die Fehleranfälligkeit verringert werden kann.

Alternativ oder zusätzlich kann das per Funk übermittelte reaktive Bestätigungssignal 35 jedoch auch Daten wie die aktuelle Zeitverzögerung zwischen dem Detektieren des Such-Fächers 22 und dem Rückübermitteln des Bestätigungssignals 35, Neigung des Lotstocks, Höhe des Reflektors 31 über Grund, Reflektorkonstanten und/oder seitens der Zieleinheit 3 erfasste Messwerte wie Temperatur oder Luftdruck enthalten.

In Figur 4 ist - ähnlich wie in Figur 2 - ein weiteres Anwendungsbeispiel gezeigt, bei dem die abgebildete Zieleinheit 3 nicht das von dem Vermessungsgerät 2 gesuchte Zielobjekt darstellt.

Dem fächerförmigen Such-Strahl 22 ist daher wiederum ein sich von dem Identifizierungscode ID4 der hier abgebildeten Zieleinheit 3 unterscheidender Identifizierungscode ID2 als zu suchender Code sID aufmoduliert.

Trifft beim Suchvorgang der Such-Fächer 22 des Vermessungsgeräts 2 auf die im Sichtfeld positionierte Zieleinheit 3 auf, so wird durch diese der aufmodulierte Code sID mit dem eigenen Identifizierungscode ID4 verglichen und eine Nichtübereinstimmung festgestellt. In Figur 4 ist die Zieleinheit 3 nun derart ausgebildet, dass im Fall der Nichtübereinstimmung ein negatives Antwortsignal 39, d.h. ein definiertes Nichtübereinstimmungssignal an das Vermessungsgerät 2 übermittelt wird.

Dabei können zusammen mit dem negativen Antwortsignal 39 per Funk dennoch Zusatzinformationen wie z.B. der eigene Identifizierungscode ID4 der Zieleinheit 3 oder weitere Daten an das Vermessungsgerät 2 übermittelt werden.

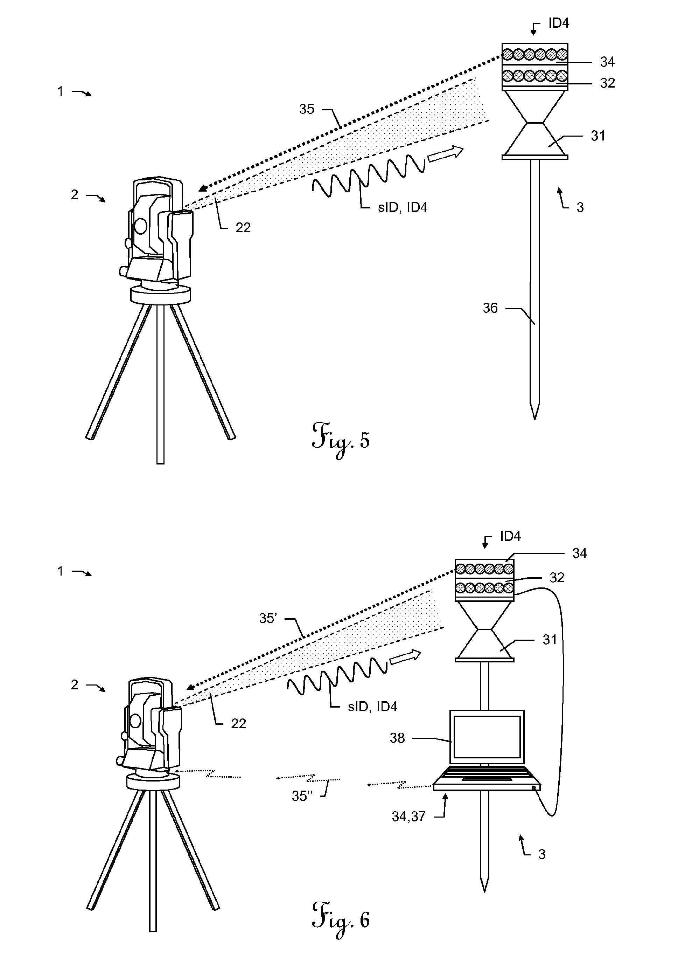

In den Figuren 5 und 6 sind - ähnlich wie in den Figuren 1 und 3 - weitere Anwendungsbeispiele gezeigt, bei welchen die abgebildete Zieleinheit 3 genau das von dem Vermessungsgerät 2 gesuchte Zielobjekt darstellt.

Im Unterschied zu den Figuren 1 und 3 weist jedoch die Zieleinheit 3 in Figur 5 eine als Lichtquelle ausgebildete Sendekomponente 34 zur Übermittlung des Bestätigungssignals 35 auf. Insbesondere weist die Lichtquelle dabei mehrere, in unterschiedliche Raumrichtungen ausgerichtete LEDs oder Laserdioden auf, sodass die optische Strahlung - als das reaktive Bestätigungssignal 35 - omnidirektional ausgesendet wird. Im Speziellen kann die optische Strahlung eine derartige Charakteristik aufweisen, dass diese durch das Vermessungsgerät 2 bei der Detektion eindeutig von Störreflexen und/oder Sonnenlicht unterscheidbar ist.

Der Reflektor 31, der Detektor 32 und die Lichtquelle der Zieleinheit 3 können beispielsweise in vertikaler Richtung linear aneinanderfolgend an der Vermessungsstange 36 angeordnet sein, wobei die Anordnungsreihenfolge der Komponenten auch beliebig anders als in Figur 5 dargestellt gewählt werden kann. Die Auswertekomponente kann dabei z.B. in ein Gehäuse des Detektors 32 oder der Sendekomponente 34 mitintegriert sein.

Alternativ zur linear aneinanderfolgenden Anordnung können jedoch der Detektor und/oder die Lichtquelle auch in den beispielsweise als Rundum-Prisma ausgebildeten Reflektor integriert sein.

Die in Figur 6 abgebildete Zieleinheit 3 weist sowohl eine Lichtquelle als auch ein in das Peripheriegerät 38 integriertes Funkmodul 37 als Sendekomponenten 34 zur Übermittlung sowohl eines optischen Bestätigungssignals 35' als auch eines Bestätigungssignals 35" per Funk auf. Dadurch kann z.B. die Robustheit des Vermessungssystems 1 hinsichtlich der Identifikation der Zieleinheit 3 weiter erhöht werden.

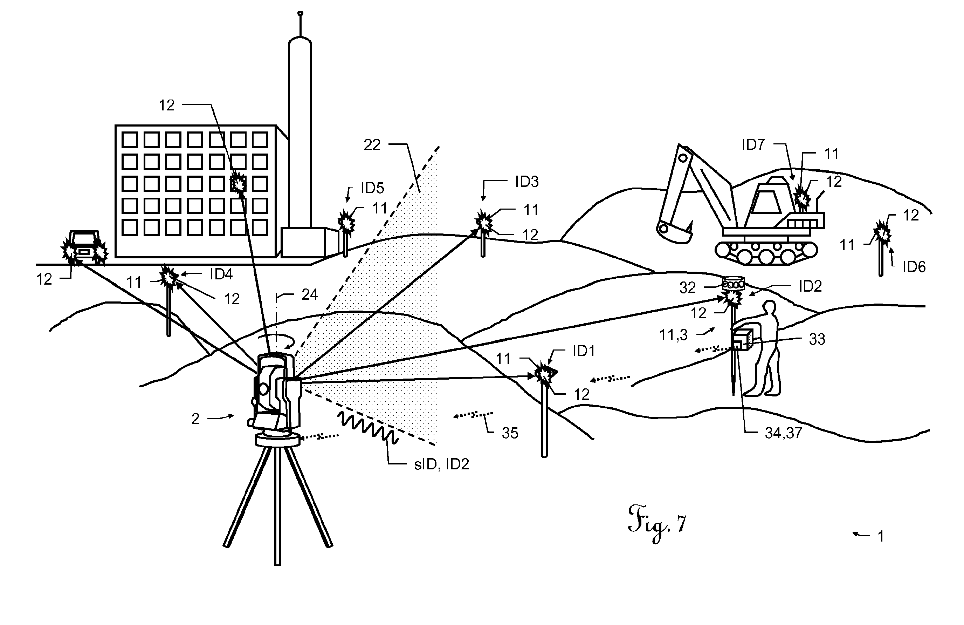

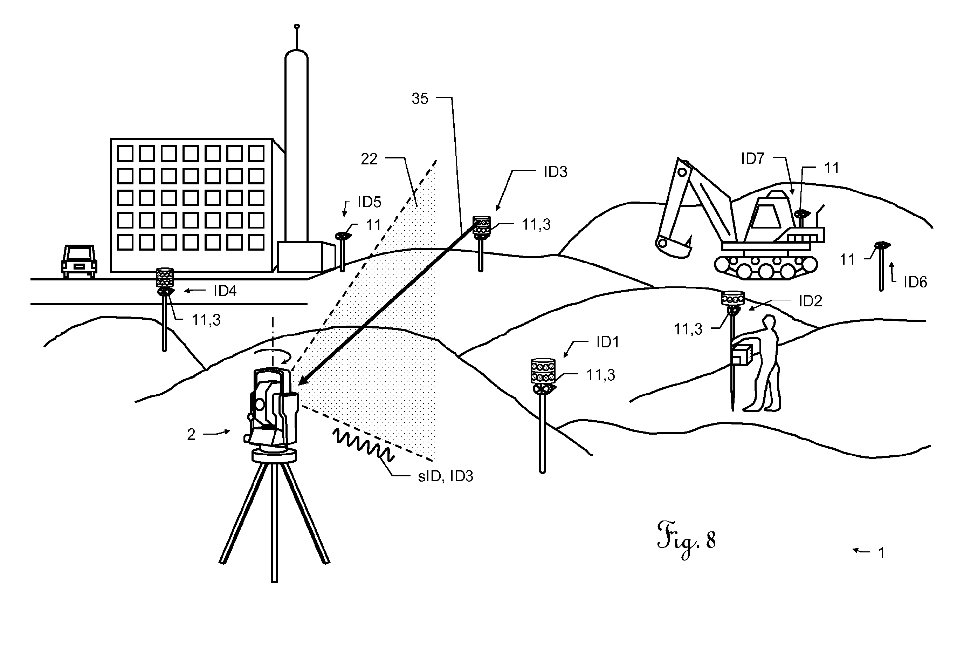

Figuren 7 und 8 zeigen Beispiele für ein erfindungsgemässes automatisches Such- und Identifizierungsverfahren im Rahmen jeweils einer typischen praktischen Anwendung im Feld.

Das erfindungsgemässe Verfahren erfolgt mit zumindest einer Zieleinheit 3, die eines von mehreren Zielobjekten 11 einer Zielobjekt-Menge darstellt, und mit einem geodätischen Vermessungsgerät 2, das eine Entfernungs- und Winkelmessfunktionalität aufweist. Den Zielobjekten 11 sind dabei jeweils ein eindeutiger Identifizierungscode ID1-ID7 zugeordnet, sodass sich die Zielobjekte 11 anhand des Identifizierungscodes ID1-ID7 untereinander eindeutig unterscheiden lassen.

Bei dem Verfahren zum Identifizieren der Zieleinheit 3 mit dem geodätischen Vermessungsgerät 2 emittiert das Vermessungsgerät 2 einen optischen Strahl 22 in eine definierte Raumrichtung, insbesondere einen vertikal aufgefächerten Laserstrahl, der zum Absuchen eines Sichtfeldbereichs um eine Stehachse 24 des Vermessungsgeräts 2 geschwenkt wird. Trifft der optische Strahl 22 auf der Zieleinheit 3 auf, so wird dieser durch die Zieleinheit 3 detektiert.

Erfindungsgemäss ist dabei dem optischen Strahl 22 ein Identifizierungscode ID2 eines gesuchten, zu vermessenden Zielobjekts 11 der Zielobjekt-Menge als zu suchender Code sID aufmoduliert.

Die Zieleinheit 3 demoduliert den detektierten Strahl 22 und überprüft, ob der dem empfangenen Strahl 22 aufmodulierte Code sID mit dem eigenen Identifizierungscode ID2 übereinstimmt. Falls die Auswertekomponente 33 dabei eine Übereinstimmung feststellt, wird von der Zieleinheit 3 ein reaktives Bestätigungssignal 35 an das geodätische Vermessungsgerät 2 übermittelt. Insbesondere kann dabei das reaktive Bestätigungssignal 35 mit einer bekannten zeitlichen Antwortverzögerung nach dem Empfangen des optischen Strahls 22 an das Vermessungsgerät 2 gesendet werden.

Anschliessend kann das Vermessungsgerät 2 die gesuchte Zieleinheit 3 anhand des reaktiven Bestätigungssignals 35, insbesondere anhand eines Empfangszeitpunktes des reaktiven Bestätigungssignals 35, identifizieren.

Der seitens des Vermessungsgeräts 2 emittierte optische Strahl 22 kann dabei im Speziellen zum Absuchen eines Sichtfeldbereichs des Vermessungsgeräts 2 innerhalb eines definierten Winkelbereichs geneigt und/oder um eine Stehachse 24 der Vermessungsgeräts 2 geschwenkt werden.

Dabei kann durch die Zieleinheit 3, insbesondere durch einen Reflektor der Zieleinheit 3, ein Teil des einfallenden optischen Strahls 22 in Richtung des Vermessungsgeräts 2 zurück reflektiert werden.

Das geodätische Vermessungsgerät 2 kann somit an Zielobjekte 11 reflektierte Teile des Strahls 22 empfangen und diese als Reflexe 12 erfassen, wobei den Reflexen 12 ein gemessener Winkel und insbesondere eine gemessene Entfernung zugeordnet werden. In Figur 7 sind schematisch Reflexe 12 dargestellt, die beim Auftreffen des Such-Fächers 22 auf den Zielobjekten 11 sowie beim Auftreffen auf weiteren im Sichtfeld befindlichen reflektierenden Flächen erzeugt werden. Die Reflexe 12 können winkelabhängig vom Vermessungsgerät 2 registriert werden.

Als das Identifizieren der Zieleinheit 3 wird nun abhängig vom Bestätigungssignal 35, insbesondere abhängig vom Empfangszeitpunkt des Bestätigungssignals 35, der entsprechende Reflex 12 aus der Menge der erfassten Reflexe 12 ausgewählt und mit dem Identifizierungscode ID2 der Zieleinheit 3 verknüpft.

Dabei kann das Verknüpfen des ausgewählten Reflexes 12 mit der Zieleinheit 3 bzw. mit dem Identifizierungscode ID2 der Zieleinheit 3 unter Berücksichtigung der bekannten zeitlichen Antwortverzögerung sowie abhängig von
- dem Empfangszeitpunkt des Bestätigungssignals 35,
- einem mit dem Empfangszeitpunkt verknüpften Winkel und/oder
- einer Distanzinformation erfolgen.

Dem in Figur 7 abgebildeten Such-Fächer 22 ist dabei der Identifizierungscode ID2 des gesuchten Zielobjekts 11 als Code sID aufmoduliert, welches im gezeigten Fall durch die von einem Benutzer gehaltene Zieleinheit 3 dargestellt wird. Daher übermittelt die Zieleinheit 3 automatisch reaktiv auf den Such-Fächer 22 das Bestätigungssignal 35 anhand der als Funkmodul 37 ausgebildeten Sendekomponente 34 an das Vermessungsgerät 2, sodass das Vermessungsgerät 2 jenen Reflex 12 der gesuchten Zieleinheit 3 zuordnen kann, der zeitlich - unter Berücksichtigung der Antwortverzögerung - dem Bestätigungssignal 35 entspricht.

In Figur 8 wird das Zielobjekt 11 mit dem Identifizierungscode ID3 gesucht, weshalb dem Such-Fächer 22 dieser Identifizierungscode ID3 als zu suchender Code sID aufmoduliert ist. Sämtliche im Sichtfeld positionierte Zieleinheiten 3 lesen bei Auftreffen des Such-Fächers 22 den aufmodulierten Code sID aus und vergleichen diesen mit dem jeweiligen eigenen Identifizierungscode ID1,ID2,ID3, ID4. Die gesuchte Zieleinheit 3 mit dem richtigen Identifizierungscode ID3 übermittelt erfindungsgemäss wiederum reaktiv ein Bestätigungssignal 35. In diesem Fall wird das Bestätigungssignal 35 optisch durch eine zieleinheitsseitig vorhandene Lichtquelle übermittelt. Die weiteren im Feld positionierten Zieleinheiten 3 übermitteln kein Antwortsignal reaktiv auf den auftreffenden Such-Fächer 22, da diese keine Übereinstimmung des dem Such-Fächer 22 aufmodulierten Codes sID mit dem jeweils eigenen Identifizierungscode ID1,ID2,ID4 feststellen.

Werden mehrere Zieleinheiten gesucht, können dem seitens des Vermessungsgeräts ausgesendeten Such-Strahl gemäss einer weiteren Ausführungsform auch mehrere Identifikationscodes von mehreren Zieleinheiten aus der Zielobjekt-Menge als zu suchende Codes aufmoduliert werden, sodass genau die jeweils gesuchten Zieleinheiten bei Auftreffen des Such-Fächers ein reaktives Bestätigungssignal zurück an das Vermessungsgerät übermitteln. Trägt das zieleinheitsseitig ausgesendete Bestätigungssignal dabei zusätzlich jeweils die eigene Identität der jeweiligen Zieleinheit, so kann das Vermessungsgerät die Zieleinheiten jeweils eindeutig identifizieren. Vorteilhaft ist dabei gemäss der Erfindung, dass die "nichtgesuchten" Zieleinheiten aus der Zielobjekt-Menge "still" bleiben und nicht ebenso ihre Identität als Antwort bei Auftreffen des Suchstrahls versenden, wodurch der Aufwand seitens des Vermessungsgeräts hinsichtlich dem Verarbeiten der Antworten der Zieleinheiten erheblich verringert werden kann.

Es versteht sich, dass diese dargestellten Figuren nur mögliche Ausführungsbeispiele schematisch darstellen. Die verschiedenen Ansätze können ebenso miteinander sowie mit Verfahren des Stands der Technik kombiniert werden.

Unter dem Begriff "geodätisches Vermessungsgerät" soll im Rahmen der vorliegenden Erfindung verallgemeinernd stets ein Messinstrument, beispielsweise ein Theodolit oder eine Totalstation, verstanden werden, das über Vorrichtungen zur Messung oder Überprüfung von Daten mit räumlichem Bezug verfügt. Insbesondere betrifft dies die Messung von Entfernung und/oder Richtung bzw. Winkeln zu einem Bezugs- oder Messpunkt. Darüber hinaus können jedoch noch weitere Vorrichtungen, z.B. Komponenten zur satellitengestützten Ortsbestimmung (bspw. GPS, GLONASS oder GALILEO), vorhanden sein, die für ergänzende Messungen oder Datenaufnahmen verwendet werden können.

## Patentansprüche

1. Geodätisches Vermessungssystem (1) mit einem geodätischen Vermessungsgerät (2) - insbesondere Theodolit oder Totalstation - und mehreren Zielobjekten (11), die eine Zielobjekt-Menge bilden, wobei jedem der Zielobjekte (11) jeweils ein eindeutiger Identifizierungscode (ID) zugeordnet ist, sodass sich die Zielobjekte (11) anhand des Identifizierungscodes (ID) untereinander unterscheiden lassen,
und wobei
• das Vermessungsgerät (2) aufweist
□ eine Entfernungs- und Winkelmessfunktionalität zur Positionsbestimmung der Zielobjekte (11) sowie
□ mindestens eine Strahlungsquelle (21) zur Emission eines optischen Strahls (22) in eine definierte Raumrichtung, insbesondere eines schwenkbaren vertikal aufgefächerten Laserstrahls, und
• eines der Zielobjekte (11) als Zieleinheit (3) ausgebildet ist und aufweist
□ einen Reflektor (31) sowie
□ einen Detektor (32) zum Empfang des Strahls (22), **dadurch gekennzeichnet, dass**
• das Vermessungsgerät (2) derart zur Emission des Strahls (22) ausgebildet ist, dass dem Strahl (22) der Identifizierungscode (ID) eines gesuchten Zielobjekts (11) aus der Zielobjekt-Menge als ein zu suchender Code (sID) aufmodulierbar ist,
• die Zieleinheit (3) aufweist
□ eine mit dem Detektor (32) verbundene Auswertekomponente (33) zur Überprüfung einer Übereinstimmung zwischen dem dem Strahl (22) aufmodulierten Code (sID) und dem eigenen Identifizierungscode (ID) der Zieleinheit (3), und
□ eine Sendekomponente (34) zur bei Übereinstimmung erfolgenden Übermittlung eines reaktiven Bestätigungssignals (35) an das geodätische Vermessungsgerät (2), sowie dass
• das Vermessungsgerät (2) eine Verarbeitungskomponente (23) aufweist, die ausgebildet ist zur Identifikation der Zieleinheit (3) aus der Zielobjekt-Menge anhand des reaktiven Bestätigungssignals (35), insbesondere abhängig von einem Empfangszeitpunkt des reaktiven Bestätigungssignals (35).

2. Geodätisches Vermessungssystem (1) nach Anspruch 1, **dadurch gekennzeichnet, dass**
die Zieleinheit (3) ausgebildet ist zur Übermittlung des reaktiven Bestätigungssignals (35) an das Vermessungsgerät (2) mit einer bekannten zeitlichen Antwortverzögerung nach der Detektion des optischen Strahls (22).

3. Geodätisches Vermessungssystem (1) nach Anspruch 1 oder 2,
**dadurch gekennzeichnet, dass**
• das Vermessungsgerät (2) ausgebildet ist zur Erfassung von jeweils an Zielobjekten (11) der Zielobjekt-Menge reflektierten Teilen des Strahls (22) als Reflexe (12), wobei den Reflexen (12) ein gemessener Winkel und insbesondere eine gemessene Entfernung zugeordnet wird, und
• die Verarbeitungskomponente (23) als Identifikation jenen Reflex (12) mit der Zieleinheit (3) verknüpft, der zeitlich - unter Berücksichtigung der bekannten Antwortverzögerung - dem Bestätigungssignal (35) entspricht.

4. Geodätisches Vermessungssystem (1) nach einem der vorangehenden Ansprüche,
**dadurch gekennzeichnet, dass**
der Reflektor (31), insbesondere ausbildet als Rundum-Retroreflektor, und der Detektor (32), insbesondere ausgebildet zum omnidirektionalen Empfang, an einer gemeinsamen Vermessungsstange (36) befestigt sind, insbesondere wobei der Detektor (32) über oder unter dem Reflektor (31) an diesen anschliessend angeordnet ist.

5. Geodätisches Vermessungssystem (1) nach einem der vorangehenden Ansprüche,
**dadurch gekennzeichnet, dass**
die Sendekomponente (34) als Lichtquelle, insbesondere als mehrere, in unterschiedliche Raumrichtungen ausgerichtete LEDs, ausgebildet ist zur omnidirektionalen Aussendung von optischer Strahlung als das reaktive Bestätigungssignal (35), insbesondere wobei die optische Strahlung eine derartige Charakteristik aufweist, dass diese von Störreflexen und Sonnenlicht unterscheidbar ist.

6. Geodätisches Vermessungssystem (1) nach Anspruch 5, **dadurch gekennzeichnet, dass**
• der Reflektor (31), der Detektor (32) und die Lichtquelle in vertikaler Richtung linear aneinanderfolgend angeordnet sind,
oder
• der Detektor (32) und/oder die Lichtquelle in den Reflektor (31) integriert sind.

7. Geodätisches Vermessungssystem (1) nach einem der Ansprüche 1 bis 4,
**dadurch gekennzeichnet, dass**
die Sendekomponente (34) als Funkmodul (37) ausgebildet ist zur Aussendung eines Funksignals als das reaktive Bestätigungssignal (35),
insbesondere wobei das Funkmodul (37) und/oder die Auswertekomponente (33) in ein mit dem Detektor (32) verbundenen handhaltbaren Peripheriegerät (38) mit Fernsteuerfunktion für das Vermessungsgerät (2) integriert sind.

8. Geodätisches Vermessungssystem (1) nach einem der vorangehenden Ansprüche,
**dadurch gekennzeichnet, dass**
mehrere Zielobjekte (11) der Zielobjekt-Menge als Zieleinheiten (3) ausgebildet sind und jeweils aufweisen
• einen Reflektor (31), insbesondere einen optischen Retroreflektor,
• einen Detektor (32) zum, insbesondere omnidirektionalen, Empfang des optischen Strahls (22),
• eine mit dem Detektor (32) verbundene Auswertekomponente (33) zur Überprüfung einer Übereinstimmung zwischen dem dem Strahl (22) aufmodulierten Code (sID) und dem jeweils eigenen Identifizierungscode (ID) der jeweiligen Zieleinheit (3), und
• eine Sendekomponente (34) zur bei Übereinstimmung erfolgenden Übermittlung eines reaktiven Bestätigungssignals (35) an das geodätische Vermessungsgerät (2).

9. Geodätisches Vermessungsgerät (2) - insbesondere Theodolit oder Totalstation - für ein Vermessungssystem (1) nach einem der vorangehenden Ansprüche, wobei das Vermessungsgerät (2) zur Identifikation einer
- eines von mehreren Zielobjekten (11) einer Zielobjekt-Menge darstellenden - Zieleinheit (3) ausgebildet ist und den Zielobjekten (11) jeweils ein eindeutiger Identifizierungscode (ID) zugeordnet ist, sodass sich die Zielobjekte (11) anhand des Identifizierungscodes (ID) untereinander unterscheiden lassen,
und wobei das Vermessungsgerät (2) aufweist
• eine Entfernungs- und Winkelmessfunktionalität zur Positionsbestimmung der Zielobjekte (11) und
• mindestens eine Strahlungsquelle (21) zur Emission eines optischen Strahls (22) in eine definierte Raumrichtung, insbesondere eines schwenkbaren vertikal aufgefächerten Laserstrahls,
**dadurch gekennzeichnet, dass**
das Vermessungsgerät (2) derart zur Emission des Strahls (22) ausgebildet ist, dass dem Strahl (22) der Identifizierungscode (ID) eines gesuchten Zielobjekts (11) aus der Zielobjekt-Menge als ein zu suchender Code (sID) aufmodulierbar ist, und aufweist
• eine Empfangseinheit zur Erwartung eines zieleinheitsseitigen Bestätigungssignals (35) innerhalb eines vorgegebenen Zeitfensters während und/oder nach der Emission des Strahls (22) sowie
• eine Verarbeitungskomponente (23) zur Identifikation der Zieleinheit (3) aus der Zielobjekt-Menge anhand des Bestätigungssignals (35), insbesondere abhängig von einem Empfangszeitpunkt des Bestätigungssignals (35).

10. Zieleinheit (3) für ein Vermessungssystem (1) nach einem der Ansprüche 1 bis 8, das ein geodätisches Vermessungsgerät (2) zur Identifikation und Positionsbestimmung der Zieleinheit (3) aufweist, wobei die Zieleinheit (3) eines von mehreren Zielobjekten (11) einer Zielobjekt-Menge darstellt, denen jeweils ein eindeutiger Identifizierungscode (ID) zugeordnet ist, sodass sich die Zielobjekte (11) anhand des Identifizierungscodes (ID) untereinander unterscheiden lassen,
und wobei die Zieleinheit (3) aufweist
• einen Reflektor (31), insbesondere einen optischen Retroreflektor, und
• einen Detektor (32) zum, insbesondere omnidirektionalen, Empfang eines durch das Vermessungsgerät (2) emittierten optischen Strahls (22), insbesondere eines Teils eines vertikal aufgefächerten Laserstrahls, dem ein Code (sID) aufmoduliert ist,
**gekennzeichnet durch**
• eine mit dem Detektor (32) verbundene Auswertekomponente (33) zur Auslesung des Codes (sID) und zur Überprüfung einer Übereinstimmung zwischen dem Code (sID) und dem eigenen Identifizierungscode (ID) der Zieleinheit (3), und
• eine Sendekomponente (34) zur bei Übereinstimmung erfolgenden Übermittlung eines reaktiven Bestätigungssignals (35) an das Vermessungsgerät (2), sodass die Zieleinheit (3) **durch** das Vermessungsgerät (2) anhand des
Bestätigungssignals (35) identifizierbar ist.

11. Verfahren zum Identifizieren einer Zieleinheit (3) mit einem geodätischen Vermessungsgerät (2), insbesondere Theodolit oder Totalstation, das eine Entfernungs- und Winkelmessfunktionalität aufweist,
wobei die Zieleinheit (3) eines von mehreren Zielobjekten (11) einer Zielobjekt-Menge darstellt und den Zielobjekten (11) jeweils ein eindeutiger Identifizierungscode (ID) zugeordnet ist, sodass sich die Zielobjekte (11) anhand des Identifizierungscodes (11) untereinander unterscheiden lassen,
mit den Schritten
• Emittieren eines optischen Strahls (22) in eine definierte Raumrichtung durch das
Vermessungsgerät (2), insbesondere eines schwenkenden vertikal aufgefächerten Laserstrahls, und
• Detektieren des Strahls (22) durch die
Zieleinheit (3),
**dadurch gekennzeichnet, dass**
• dem optischen Strahl (22) der Identifizierungscode (ID) eines gesuchten Zielobjekts (11) aus der Zielobjekt-Menge als ein zu suchender Code (sID) aufmoduliert ist,
• die Zieleinheit (3)
□ eine Übereinstimmung zwischen dem dem empfangenen Strahl (22) aufmodulierten Code (sID) und dem eigenen Identifizierungscode (ID) der Zieleinheit überprüft und
□ bei Übereinstimmung ein reaktives Bestätigungssignal (35) an das geodätische Vermessungsgerät (2) übermittelt,
sowie dass
• das Vermessungsgerät (2) die gesuchte Zieleinheit (3) anhand des reaktiven Bestätigungssignals (35), insbesondere abhängig von einem Empfangszeitpunkt des reaktiven Bestätigungssignals (35), identifiziert.

12. Verfahren nach Anspruch 11,
**dadurch gekennzeichnet, dass**
der optischen Strahl (22) zum Absuchen eines Sichtfeldbereichs des Vermessungsgeräts (2) innerhalb eines definierten Winkelbereichs geneigt und/oder, insbesondere um eine Stehachse (24) des Vermessungsgeräts (2), geschwenkt wird.

13. Verfahren nach Anspruch 11 oder 12,
**dadurch gekennzeichnet, dass**
die Zieleinheit (3) bei festgestellter Übereinstimmung das reaktive Bestätigungssignal (35) mit einer bekannten zeitlichen Antwortverzögerung nach dem Empfangen des optischen Strahls (22) an das Vermessungsgerät (2) übermittelt.

14. Verfahren nach Anspruch 13,
**dadurch gekennzeichnet, dass**
• die Zieleinheit (3) einen Teil des einfallenden optischen Strahls (22) in Richtung des Vermessungsgeräts (2) reflektiert,
• das geodätische Vermessungsgerät (2) an Zielobjekte (11) reflektierte Teile des Strahls (22) empfängt und als Reflexe (12) erfasst, wobei den Reflexen (12) ein gemessener Winkel und insbesondere eine gemessene Entfernung zugeordnet wird, und
• das Identifizieren der Zieleinheit (3) erfolgt durch ein Empfangen des Bestätigungssignals (35) seitens des Vermessungsgeräts (2), wobei jener der erfassten Reflexe (12) mit der Zieleinheit (3) verknüpft wird, der zeitlich unter Berücksichtigung der bekannten Antwortverzögerung dem Bestätigungssignal (35) entspricht.

15. Verfahren nach Anspruch 14,
**dadurch gekennzeichnet, dass**
das Verknüpfen eines der erfassten Reflexe (12) mit der Zieleinheit (3) anhängig von
• dem Empfangszeitpunkt des Bestätigungssignals (35),
• einem mit dem Empfangszeitpunkt verknüpften Winkel und/oder
• einer Distanzinformation erfolgt.
